# EUROPEAN PATENT APPLICATION

(11) **EP 4 451 194 A1**
(43) Date of publication of application: **23.10.2024**
(21) Application number: 23315095.2
(22) Date of filing: 21.04.2023
(51) Int. Cl.: G06Q 20/32, G06Q 20/38

(54) **ACTIVATION METHOD AND SYSTEM**

(71) Applicant: Mastercard International Incorporated, Purchase, NY 10577 (US)
(72) Inventor: Raynier, Jean-Robert, 92380 Garches (FR)
(74) Representative: Murgitroyd & Company

(57) **Abstract**

A system and method for auto-enrolment of a user's payment device in an e-commerce payments system upon activation of the payment device, where the enrolment of the payment device follow sequentially from the activation of the payment device.

## Description

### FIELD OF THE DISCLOSURE

The present disclosure relates to an activation method and system. More particularly, but not exclusively, it relates to an activation method and system combining auto-enrollment with activation of an instrument, typically but not exclusively a payment instrument.

### BACKGROUND

Many remote e-commerce payment platforms, such as mastercard^{®} Click To Pay^{™}, exist currently which allow a customer to pay for their products on an e-commerce site with very little friction. However, the enrolment of users into those e-commerce platforms is complex and requires multiple user interactions with online forms. Also, know your customer (KYC) provisions can require further customer data to be input in order to satisfy legal requirements and provide the basis for strong customer authentication. These requirements, in particular the multiple user interactions, induce friction in the customer enrolment procedure which can cause potential customers to abandon the enrolment journey prior to completing it. This reduces customer uptake of e-commerce payment platforms that provide a higher quality of user interaction over the classic approach of entering payment card details into an online form, leading to increased complexity of user interaction in the long run and more complex and computationally intensive requirements for processing of payments compared to specialist e-commerce payment platforms.

Currently, a user receiving a new payment card, either a soft, virtual card or a physical card, has to activate their card, typically via a mobile banking app which uses two factor authentication for security to ensure that it is the cardholder who is activating the payment card. A use wishing to sign up to use an e-commerce payment platform has to enrol their payment card via a completely separate mechanism than that associated with the activation of the payment card. This involves multiple interactions of the user with multiple software platforms.

It will be appreciated that multiple interactions with software platforms present a number of issues, firstly multiple interactions with multiple software platforms require multiple exchanges of data leading to high volumes of network traffic associated with card activation and enrolment into an e-commerce payment platform. Also, the need to have multiple, disparate interactions to enrol a payment card represents a security issue as each different interaction represents a point at which a user's card details can be intercepted. Additionally, the need for multiple interactions leads to a poor user experience which can lead to high levels of abandonment of enrolment to e-commerce payment platforms. A further limitation of the present e-commerce payment platform systems is that they are not provider agnostic, that is to say that each platform provider has their own enrolment mechanism which requires large technology investments by e-commerce platforms to accommodate the many payment platforms that in existence. None of the current systems allow for the easy handling of number of possible e-commerce payment application programming interfaces (APIs) in a single user interaction by routing a request to the appropriate service provider on the back end. Currently, standardised in-store and online channels for card payment are activated separately for a particular payment card.

### SUMMARY OF THE DISCLOSURE

According to a first aspect of the present disclosure there is provided a method of registering a user account to an e-commerce payments platform comprising the steps of:
reading data identifying a payment device;
attempting to activate the payment device
automatically commencing a registration process of the payment device on an e-commerce platform if activation of the payment device is complete; and either
registering the user account to the e-commerce payments platform; or
registering the payment device to an existing user account on the e-commerce platform.

Reading the data identifying the payment device may comprise receiving said data at a reader device from the payment device via a wireless interaction. The wireless interaction may comprise a near field communication (NFC) interaction. The wireless interaction may comprise an NFC data exchange format (NDEF) interaction. The reader device may comprise a mobile telephone or a payment terminal. Reading the data identifying the payment device may be instigated by reading a quick response (QR) code using a camera of the reader device. The wireless interaction may comprise a Bluetooth interaction.

The method may further comprise associating a payment account associated with the payment device with a user persona account on the e-commerce platform. The method may comprise activating the user persona account on the e-commerce platform for payment processing.

Registering the user account to the e-commerce payments platform may comprise provisioning, to the e-commerce payments platform, data corresponding to at least one of: card primary account number (PAN), email address, telephone number, address. The address may comprise at least one of: shipping address, billing address, home address. Provisioning data corresponding to a card details as parameters may comprise pushing said data to a persona provisioning system. The card details may comprise data corresponding to cardholder name and primary account number. The persona provisioning system may comprise a payment scheme push provisioning API.

Reading the data identifying the payment device may occur concurrently to activating the payment device.

The method may comprise transmitting the data identifying the payment device to a persona service provider server via a broker processor arranged to select one persona service provider server from a plurality of persona service provider servers based upon the contents of at least a portion of the data identifying a payment device. The method may comprise routing the data identifying a payment device to the selected persona service provider server via an API broker. The method may comprise enabling the user account for e-commerce transactions by a digital banking application running on a user device.

The method may comprise registering the user account on the e-commerce payments platform based on the identification via the digital banking application. The method may comprise the digital banking application populating a digital form with user information stored within the digital banking application. The method may comprise providing a digital form within the banking application for user population of user information required for registering the user account on the e-commerce payments platform. The method may comprise the digital banking application redirecting the user to a web form for entry of user information. The digital banking application may comprise a software development kit (SDK) arranged to communicate with an API broker server arranged to route the data identifying the payment device to an appropriate persona server. The method may comprise the digital banking application pulling user information required for registering the user account on the e-commerce payments platform from a remote server of a financial institution, typically the financial institution issuing the payment device.

The payment device may comprise at least one of: a physical payment card,a digital payment card or virtual card, or payment token, primary account number

The method may comprise making e-commerce platform functionality available to the user via a user device once the user is registered on the e-commerce platform.

According to a second aspect of the present disclosure there is provided a system for registering a user account to an e-commerce payments platform comprising:
a user device;
a reader device;
an API broker service provider server;
the reader device being arranged to read data identifying a payment device and transmit the data identifying the payment device to the API broker service provider server;
attempting to activate the payment device via a mobile banking application running on the user device based on the data identifying the payment device;
automatically commencing a registration process of the payment device on an e-commerce platform using the mobile banking application via the API broker service provider server if activation of the payment device for e-commerce is complete; and
registering the user account associated with payments device to the e-commerce payments platform via the API broker service provider server; or
registering the payment device to an existing user account on the e-commerce platform.

The system may comprise a reader device arranged to receive the data identifying a payment device from the payment device via a wireless interaction. The reader device may comprise a near field communication (NFC) reader. The wireless interaction may comprise a near field communication (NFC) interaction. The wireless interaction may comprise an NFC data exchange format (NDEF) interaction. The reader device may comprise a camera of the user device arranged to scan a quick response (QR) code. The wireless interaction may comprise the scanning of a QR code. The reader device may comprise a mobile telephone or a payment terminal. The wireless interaction may comprise a Bluetooth interaction.

The API broker service provider server may be arranged to route the request for registration to one of a plurality of persona service providers based upon the contents of at least a portion of the data identifying a payment device.

The digital banking application may be arranged to populate a digital form with user information stored within the digital banking application. The digital banking application may be arranged to redirect the user to a digital form for entry of user information. The digital banking application may be arranged to provide a digital form within the banking application for user population of user information required for registering the user account on the e-commerce payments platform. The digital banking application may be arranged to pull user information required for registering the user account on the e-commerce payments platform from a remote server of a financial institution, typically the financial institution issuing the payment device. The digital banking application may comprise a software development kit (SDK) arranged to communicate with an API broker server arranged to route the data identifying the payment device to one of a plurality of persona service providers.

The e-commerce platform may be arranged to receive and store payment tokens by push provisioning APIs via the API broker and the SDK.

The user device may be arranged to read the data identifying the payment device for e-commerce occur with reading data identifying the payment to activate the payment device.

The user device may comprise the payment device

The payment device may comprise at least one of: a physical payment card, a digital payment card, a virtual card, a primary account number or a token.

The user device may be arranged to make e-commerce platform functionality available to the user once the user is registered on the e-commerce platform.

According to third aspect of the present disclosure there is provided a processor arranged to operate as a processor of the API broker service provider server of the second aspect of the present disclosure.

According to a fourth aspect of the present disclosure there is provided a data carrier embodying instructions which when executed upon a processor causes it to operate as the service provider server processor of the second aspect of the present disclosure.

According to a fifth aspect of the present invention there is provided a user device arranged to operate as the user device of the second aspect of the present invention.

According to sixth aspect of the present disclosure there is provided a method of registering a user account to an e-commerce payments platform comprising the steps of:
receiving a plurality of data records containing data correlating payment device identifier data with user account details to identify a user account associated with the payment device from a payment device issuer;
creating user profiles from at least some of the plurality of data records on an e-commerce payment platform;
requesting confirmation from a user that data relating to the user is accurate;
receiving from a user an activation message confirming that the data relating to the user is accurate; and
activating the payment device for use in a user persona in response to the activation message wherein activating the user profile comprises make e-commerce platform functionality available to the user.

Receiving the plurality of data records may comprise passing the data records via an intermediary agent. The intermediary agent may use a push provisioning API of an e-commerce platform. The e-commerce platform may comprise a click-to-pay platform or a card scheme platform.

The method may comprise requesting user input of personally identifiable information (PII) data if one of the plurality of data records corresponding to user does not contain all data required to activate the payment device on the e-commerce platform. The method may comprise requesting user input of personally identifiable information (PII) data if the user does not confirm that the data relating to the user is accurate. The method may comprise invoking a mobile banking application on a user device. The method may comprise inputting PII via the mobile banking application. The method may comprise redirecting a user to a web form to input PII from the mobile banking application.

The plurality of data records may comprise PII.

Activating the user profile may comprise comparing PII in the activation message to PII to in at least one of the plurality of data records and activating the user profile only if a threshold of similarity is achieved.

According to seventh aspect of the present disclosure there is provided a system for registering a user account to an e-commerce payments platform comprising:
a persona service provider server comprising a processor and a data storage device;
the data storage device being arranged to store a plurality of data records containing data correlating payment device identifier data with user account details to identify a user account associated with the payment device, the plurality of data records being received from a payment device issuer;
the processor being arranged to:
   create user profiles from at least some of the plurality of data records on an e-commerce payment platform;
   request confirmation from a user that data relating to the user is accurate;
   receive from a user an activation message confirming that the data relating to the user is accurate; and
   activate the payment device in a user persona in response to the activation message, wherein activating the user profile comprises make e-commerce platform functionality available to the user.

The system may comprise an intermediary agent arranged to pass the plurality of data records to the service provider server. The intermediary agent may a push provisioning API of an e-commerce platform. The e-commerce platform may comprise a click-to-pay platform or a card scheme platform.

The processor may be arranged to request user input of personally identifiable information (PII) data if one of the plurality of data records corresponding to user does not contain all data required to activate the payment device on the e-commerce platform. The processor may be arranged to request user input of personally identifiable information (PII) data if the user does not confirm that the data relating to the user is accurate. A user device may comprise a processor arranged to invoke a mobile banking application in response to receiving the request for confirmation from a user that data relating to the user is accurate. The mobile banking application may be arranged to receive user input PII and to pass the user input PII to the persona service provider server. The mobile banking application may be arranged to redirect a user to a web form to input PII, the web form may be arranged to pass the user input PII to the persona service provider server. The mobile banking application may populate a digital form automatically with PII and may pass the user input PII to the persona service provider server. The persona service provider server processor may be arranged to update a respect one of the plurality of data records corresponding to the user with the user input PII. The processor may be arranged to re- request confirmation from a user that data relating to the user is accurate.

The plurality of data records may comprise PII.

The processor may be arranged to compare PII in the activation message to PII to in at least one of the plurality of data records and activating the user profile only if a threshold of similarity is achieved.

According to an eighth aspect of the present disclosure there is provided a processor arranged to operate as the processor of the seventh aspect of the present disclosure.

According to a ninth aspect of the present disclosure there is provided a data carrier embodying instructions which when executed upon a processor causes it to execute the method of the sixth aspect of the present disclosure.

It will be appreciated that in all aspects of the present disclosure any transfer of user specific data will typically occur with the consent of the user.

### BRIEF DESCRIPTION OF THE DRAWINGS

The present disclosure will now be described, by way of example only, by reference to the accompanying drawings, in which:
Figure 1 is a schematic representation of an e-commerce payment platform enrolment system according to an aspect of the present disclosure;
Figure 2 is a schematic representation of an enrolment process using the system of Figure 1;
Figure 3 is a schematic representation of an e-commerce payment platform enrolment system comprising a push provisioning API broker processor;
Figure 4 is a flowchart detailing a method of registering a user account to an e-commerce payments platform according to an aspect of the present disclosure;
Figure 5 is a schematic representation of provided a system for registering a user account to an e-commerce payments platform according to an aspect of the present disclosure; and
Figure 6 is a flowchart detailing a method of registering a user account to an e-commerce payments platform according to an aspect of the present disclosure.

### DESCRIPTION OF THE DISCLOSURE

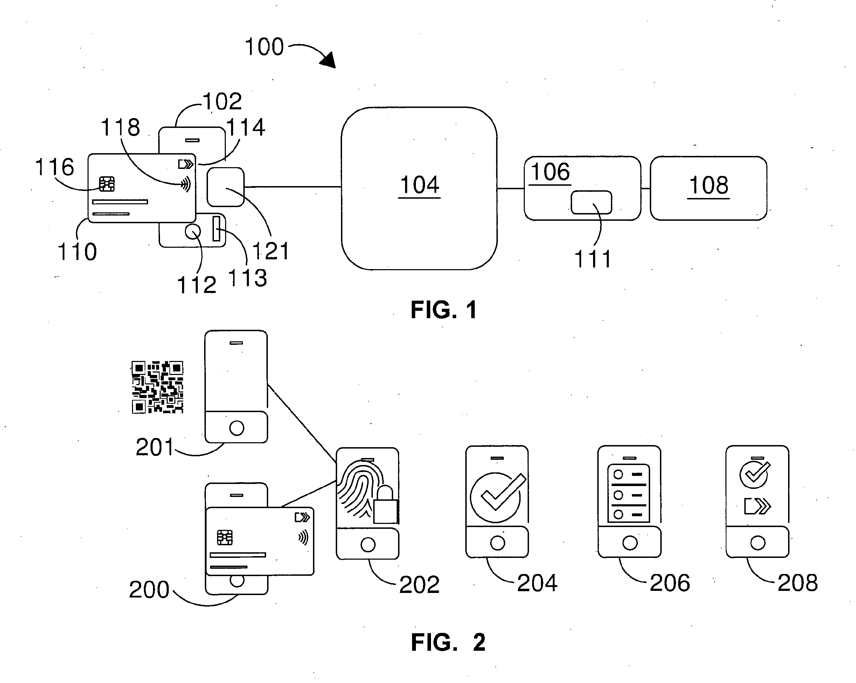

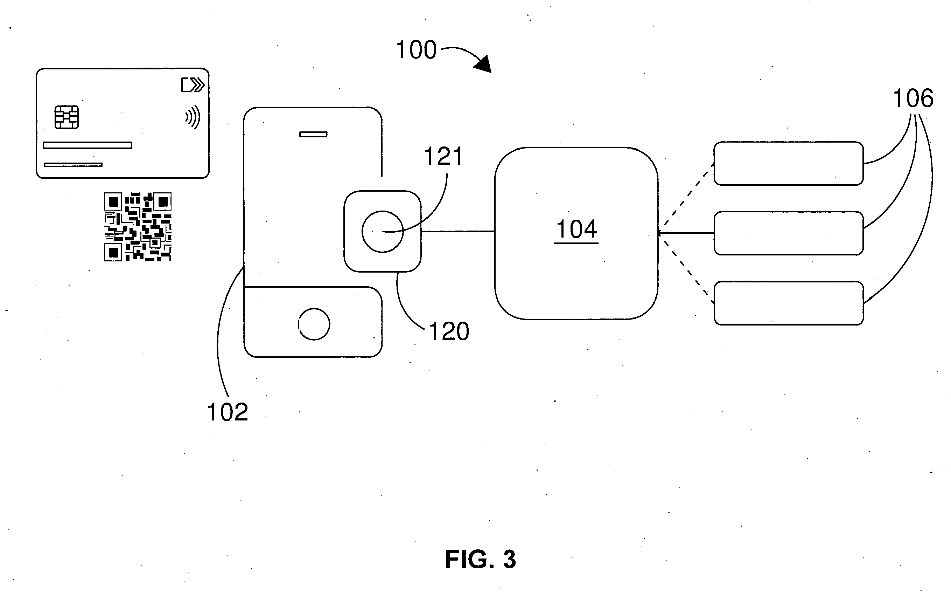

Referring now to Figures 1 to 3, an e-commerce payment platform enrolment system 100 comprises a user device 102, an application programming (API) interface broker processor 104 for push provisioning, a push provisioning engine 106, a payment platform registration server 108 and a payment device 110. Typically, the push provisioning engine 106 comprises a proprietary push provisioning API 111. By way of non-limiting example, the proprietary push provisioning API 111 is associated with a payment scheme such as mastercard^{®}.

The user device 102 comprises an NFC reader 112 and a touch screen 114. in the present embodiment, the payment device 110 comprises a processor 116 and an NFC transmitter 118. It will be appreciated that, by way of non-limiting example, a physical payment device in the form a card, typically a chip and PIN card, need not be employed a card can be embodied as a virtual, soft, card embodied as a file on a mobile device such as a mobile telephone can be used.

The processor 116 stores upon in details of the card such as, by way of non-limiting examples, primary account number (PAN) and card verification code (CVC) number. Prior to use for executing financial transactions the payment device 110 must be activated. A typical activation of the payment device 110 comprises tapping the NFC transmitter 118 of the payment device 110 to the NFC reader 112 (Step 200). The processor 116 transmits details of the user's card to the user device 102 via a wireless, NFC, connection. The NFC connection will, typically by way of non-limiting example, comprise a NFC data exchange format (NDEF) based connection. The NFC connection is used to transfer a Weblink/Html link to the NFC reader 112 from the user device 102. The Weblink calls a mobile banking application on the user device 102, this commences the activation of the payment device, and when this activation is confirmed, the user device 102 triggers the push provisioning of the cardholder data at the payment platform registration server 108 via the Push Provisioning API Broker SDK connected to the Push Provisioning API broker server. An SDK 113 in the Mobile Banking App resident on the user device 102 routes the request to the correct platform registration server 108 via a push provisioning API broker running on the broker processor 104. The weblink can be initiated by reading of a quick response (QR) code by a camera of the user device, as described in detail hereinafter. In an alternative, or additional embodiment, the wireless connection between the user device 102 and the NFC reader 112 may be a Bluetooth connection.

If the user's banking application 120 is install on the user device 102 the user will be prompted to complete strong customer authentication (SCA) (Step 202) in order to verify that they are the authorised cardholder, if the user's banking application is not install on the,user device 102 the user will either be prompted to install it. Once SCA process is completed (Step 204) the banking application 120 automatically initiates a payment platform registration process via an SDK 121 within the banking application which is arranged to communicate with the API broker server 104. Initiating the payment platform registration process comprises either redirecting the user to a platform application or by opening a registration page within the banking application itself. It will be appreciated that in some jurisdictions payment devices are shipped pre-activated for in person transactions and consequently the process can proceed directly to e-commerce activation. This automatic initiation of payment platform registration comprises the banking application 120 via the SDK 121 calling the push provisioning API running on the push provisioning server 106 via the push provisioning API broker server 104.

In one embodiment, the user is presented with a digitial form on the touch screen 114 (Step 206) with an acceptance form, which may take the form of a listing of their personally identifiable information which with the option for them to amend or complete this to reflect their current information, or it may be an acceptance button whereby the user accepts the terms and conditions of the payment platform. Upon acceptance of the terms and/or entry of the user's personally identifiable information the PAN is encrypted along with, by way of non-limiting example, the user email address, postal address, shipping addressand passed over a network to the Push Provisioning API broker 104 as a data package. The Push Provisioning API broker processor 104 interrogates the data package to determine which e-commerce payment platform the user has registered for, this will be determined by, by way of non-limiting example, determining from the PAN the card issuer or the card scheme push provisioning engine 106 to which the data package should be routed.. The Push Provisioning API broker 104 identifies the appropriate push provisioning engine 106 to which to send the user's data package and routes the data package to the appropriate push provisioning engine 106. The push provisioning engine 106 allow card issuers to push account information to payment token requestors in a secure manner to create new tokens associated with payment account. The push provisioning engine 106 passes the details to the payment platform registration server 108 where the registration process of a user persona account is completed and the payment device 110 is made available for use on the e-commerce payment platform(Step 208). It will be appreciated that, if the user already has a user persona account on the e-commerce platform the payment device can be associated with the existing account without the need to register a new user persona account on the e-commerce platform.

In an alternative or additional embodiment, the digital banking application populates the digital form with some or all of the required user information stored within the digital banking application or it can pull some or all of the required user information from a remote server of a financial institution, typically the financial institution issuing the payment device. The digital banking application may comprise a software development kit (SDK) arranged to communicate with an API broker server arranged to route the data identifying the payment device to one of a plurality of persona service providers.

In an alternative embodiment, a quick response (QR) code is used to instigate the card activation/payment platform registration process. In such an embodiment, the QR code is scanned by a camera of the user device 102 and the content of the QR code decoded and the user is directed to their banking application, or a standalone website, where activation of the payment device 110 via SCA and the automatic commencement of the e-commerce payment platform enrolment are carried out as in the previously described embodiment. The QR code can be located in a retail environment encouraging enrolment at check out or it may accompany the payment device when issued.

It will be appreciated that the user device 102 may be any suitable form factor, by way of non-limiting example, a mobile telephone, a smart watch, etc.

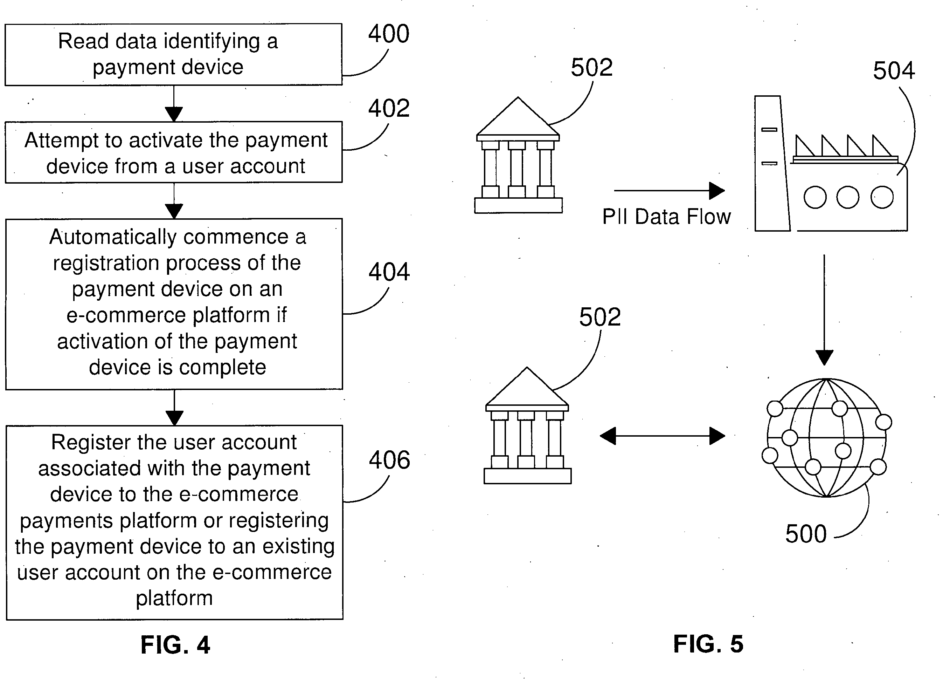

Referring now to Figure 4, a method of registering a user account to an e-commerce payments platform comprising the steps of reading data identifying a payment device using a user device (Step 400). The reading of the data identifying the payment device typically comprises an NFC transmission of card details from the card to the user device, although an alternative may be the capture of QR code by a camera of the user device that initiates the activation process. An attempt is made to activate the payment device for payment from a user account at a card issuer, typically a bank or other financial institution, on a payments network, by way of non-limiting example mastercard^{®}, typically via a banking application on the user device, although other routes can be employed. (Step 402). The activation process usually comprises SCA. Should the activation of the payment device be successful a registration process of the payment device on an e-commerce platform if activation of the payment device is complete is automatically stated (Step 404). The user payment account associated with the payment device is registered on the on the e-commerce platform to create a user persona account (Step 406), or if the user already has a user persona account on the e-commerce platform the payment device can be associated with the existing account without the need to register a new user persona account on the e-commerce platform.

The user account on the e-commerce platform is activated for payment processing. By way on non-limiting example, reading the data identifying the payment device can occur with reading data identifying the payment to activate the payment device.

It will be appreciated that the payment device may comprise a physical payment card or a digital payment card.

Referring now to Figure 5, a system for registering a user account to an e-commerce payments platform 500 comprises a service provider server comprising a processor, and a data storage device. The data storage device is arranged to store a plurality of data records containing data correlating payment device identifier data with user account details to identify a user account associated with the payment device, the plurality of data records being received from a payment device issuer 502. The processor is arranged create user profiles from at least some of the plurality of data records on an e-commerce payment platform 500. The processor receives from a user an activation message from a user via any one of a number of channels via the payment device issuer activates a user profile in response to the activation message. Activating the user profile comprises make e-commerce platform 500 functionality available to the user. Activating the user profile typically includes push provisioning of user details to a token engine.

It will be appreciated that the e-commerce payment system may receive data from a card personalisation vendor 504 which leverages existing data on card holders shared for card personalization activity and is relevant for any issuer of plastic cards. Alternative sources of personal information to be passed to the e-commerce payments system include, by way of non-limiting example, CRM system providers, Card Management system providers, Core Banking system providers, Mobile Banking providers, Bank as a Service providers, Digital First system integrators (managing e-onboarding of consumers, collecting PII data).

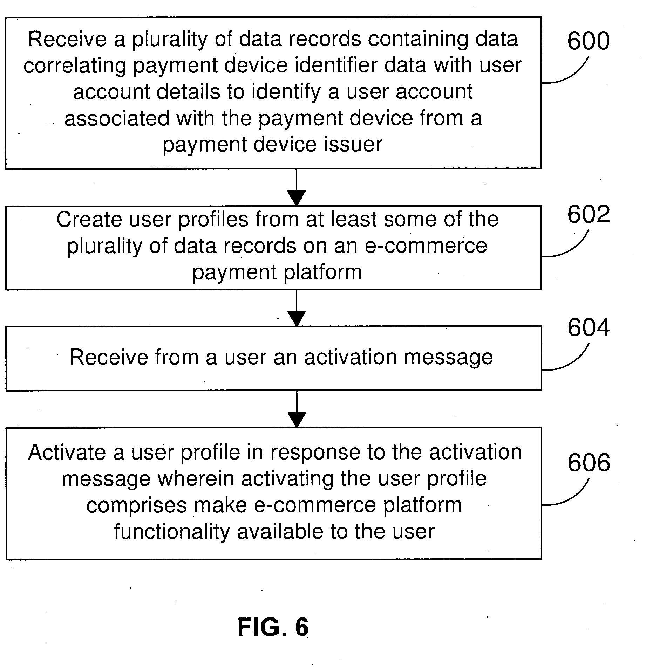

Referring now to Figure 6, a method of registering a user account to an e-commerce payments platform comprises receiving a plurality of data records containing data correlating payment device identifier data with user account details to identify a user account associated with the payment device from a payment device issuer (Step 600). User profiles are created from at least some of the plurality of data records on an e-commerce payment platform (Step 602). An activation message is received from a user (Step 604). A user profile is activated in response to the activation message wherein activating the user profile comprises make e-commerce platform functionality available to the user (Step 606).

It will be appreciated that reference to receiving the plurality of data records may comprise passing the data records via an intermediary agent. It will be further appreciated, that the activation message will typically comprise data corresponding to user input data via an application running on a user device. By way of non -limiting example, the activation message may comprise personally identifiable data (PII) and/or activating the user profile may comprise comparing PII in the activation message to PII to in at least one of the plurality of data records and activating the user profile only if a threshold of similarity is achieved.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer readable instructions that are resident at various times in various memory and storage devices in a computer and that, when read and executed by one or more processors in a computer, cause that computer to perform the operations necessary to execute operations and/or elements embodying the various aspects of the embodiments of the invention. The computer readable program instructions for carrying out operations of the embodiments of the invention may be, for example, assembly language or either source code or object code is written in any combination of one or more programming languages.

The program code embodied in any of the applications/modules described herein is capable of being individually or collectively distributed as a program product in a variety of different forms. In particular, the program code may be distributed using the computer readable storage medium having the computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other robust state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions/acts specified in the flowcharts, sequence diagrams, and/or block diagrams. The computer program instructions may be provided to one or more processors of a general-purpose computer, special purpose computer, or other programmable data processing apparatus to produce a machine, such that the instructions, which execute via the one or more processors, cause a series of computations to be performed to implement the functions and/or acts specified in the flowcharts, sequence diagrams, and/or block diagrams.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more, or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context indicates otherwise. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the general inventive concept.

## Claims

1. A method of registering a user account to an e-commerce payments platform comprising the steps of:
reading data identifying a payment device;
attempting to activate the payment device from a user account;
automatically commencing a registration process of the payment device on an e-commerce platform if activation of the payment device is complete; and
registering the user account to the e-commerce payments platform; or
registering the payment device to an existing user account on the e-commerce platform.

2. The method of Claim 1, wherein reading the data identifying the payment device comprises receiving said data at a reader device from the payment device via a wireless interaction or reading a quick response, QR, code.

3. The method of Claim 2, wherein the wireless interaction comprises an NFC data exchange format, NDEF, interaction.

4. The method of any preceding claim further comprising associating a payment account associated with the payment device with a user persona account on the e-commerce platform and activating the user persona account on the e-commerce platform for payment processing.

5. The method of any preceding claim further comprising registering the user account to the e-commerce payments platform comprises provisioning, to the e-commerce payments platform, data corresponding to at least one of: card primary account number, PAN, email address, telephone number, address.

6. The method of any preceding claim, wherein provisioning data corresponding to a card details as parameters comprises pushing said data to a persona provisioning system.

7. The method of claim 6 wherein, the persona provisioning system comprises a payment scheme push provisioning API.

8. The method of any preceding claim, wherein reading the data identifying the payment device occurs concurrently with reading data identifying to activate the payment device.

9. The method of any preceding claim further comprising transmitting the data identifying the payment device to a persona service provider server via a broker processor arranged to select one persona service provider server from a plurality of persona service provider servers based upon the contents of at least a portion of the data identifying a payment device.

10. The method of any preceding claim, wherein a software development kit, SDK, is arranged to communicate with an API broker server arranged to route the data identifying the payment device to an appropriate persona server.

11. A system for registering a user account to an e-commerce payments platform comprising:
a user device;
a reader device;
an API broker service provider server;
the reader device being arranged to read data identifying a payment device and transmit the data identifying the payment device to the API broker service provider server;
attempting to activate the payment device for e-commerce payment from a user account via a digital banking application running on the user device based on the data identifying the payment device;
automatically commencing a registration process of the payment device on an e-commerce platform using the mobile banking application via the API broker service provider server if activation of the payment device is complete; and
registering the user account associated with payments device to the e-commerce payments platform via the API broker service provider server; or
registering the payment device to an existing user account on the e-commerce platform.

12. The system of Claim 11 comprising a reader device arranged to receive the data identifying a payment device from the payment device via a wireless interaction comprising an NFC data exchange format, NDEF, interaction or via capture of a quick response, QR, code.

13. The system of either Claim 11 or Claim 12, wherein the API broker service provider server is arranged to route the request for registration to one of a plurality of persona service providers based upon the contents of at least a portion of the data identifying a payment device.

14. The system of any one of Claims 11 to 13, wherein the digital banking application comprises a software development kit, SDK, arranged to communicate with an API broker server arranged to route the data identifying the payment device to one of a plurality of persona service providers.

15. The system of any one of Claims 11 to 14, wherein reading the data identifying the payment device occurs concurrently with reading data identifying to activate the payment device.
